# FASCICULE DE BREVET EUROPEEN

(11) **EP 3 433 579 B1**
(45) Date de publication et mention de la délivrance du brevet: **20.11.2024**
(21) Numéro de dépôt: 17710282.9
(22) Date de dépôt: 13.03.2017
(51) Int. Cl.: G01C 21/16, G01C 25/00

(54) **PROCÉDÉ ET SYSTÈME DE LOCALISATION DE CHARIOTS DE MANUTENTION**
VERFAHREN UND SYSTEM ZUM AUFFINDEN VON TRANSPORTWAGEN
METHOD AND SYSTEM FOR FINDING HANDLING TROLLEYS

(30) Priorité: 21.03.2016 FR 1652421
(43) Date de publication de la demande: 30.01.2019
(73) Titulaire: Sagemcom Energy & Telecom SAS, 92270 Bois-Colombes (FR)
(72) Inventeur: TEBOULLE, Henri, 92500 Rueil Malmaison (FR)
(74) Mandataire: Cabinet Boettcher
(86) Numéro de dépôt international: PCT/EP2017/055867
(87) Numéro de publication internationale: WO 2017/162463

(56) Documents cités:
- FR-A1- 3 000 542
- FR-A1- 3 000 542
- GB-A- 1 353 374
- GB-A- 1 353 374
- US-A1- 2015 345 952
- US-A1- 2015 345 952
- US-A1- 2016 075 177
- US-A1- 2016 075 177

## Description

La présente invention concerne la localisation de chariots de manutention dans un lieu. Ces chariots de manutention, qui peuvent aussi avoir la forme de wagonnets, sont couramment utilisés pour le transport de marchandises par exemple dans des sites de production industrielle.

Il a été envisagé de localiser de tels chariots au moyen de récepteurs de signaux de positionnement par satellites (signaux GPS par exemple). Une telle solution est cependant coûteuse et suppose que le lieu ne comporte pas d'obstacles s'opposant à la réception des signaux de positionnement par satellites.

Le document US 2016/075177 A1 décrit une roue motorisée qui est équipée d'une pluralité de capteurs et de moyens de communication permettant notamment de transmettre les données mesurées par les capteurs a des éléments extérieurs. D1 n'utilise pas les données issues de ses capteurs pour déterminer sa position mais simplement la réception d'un signal GPS. 1

Le document FR 3 000 542 A1 décrit un procédé d évaluation de la vitesse d'un véhicule ferroviaire équipe d'une centrale inertielle. Certes, ce procédé permet de déterminer la distance parcourue par le véhicule et donc sa position sur la voie.

Il a également été envisagé d'équiper les chariots de modules de télécommunication agencés pour transmettre des signaux à des bornes de télécommunication fixes disposées dans le lieu en des positions prédéterminées de telle manière que chaque chariot, quelle que soit sa position dans le lieu, soit à portée simultanément de plusieurs bornes de télécommunication. La position de chaque chariot peut être déterminée par mesure des temps de vol des signaux entre ledit chariot et plusieurs des bornes de télécommunication. Il semble toutefois difficile d'obtenir une localisation suffisamment précise des chariots par ce moyen.

Il a enfin été envisagé d'équiper des chariots d'une centrale inertielle de type MEMS dont le coût est relativement faible. Une telle centrale comprend un dispositif de détection de mouvement linéaire comportant des accéléromètres disposés selon les axes d'un repère de détection. Les accéléromètres fournissent des données de mouvement linéaire correspondant à l'accélération du chariot selon les axes en question, accélération à partir desquelles on peut déterminer une vitesse et une position du chariot par rapport au repère de détection. La centrale comprend en outre un dispositif de détection de mouvement angulaire comportant des gyromètres disposés selon les axes du repère de détection pour mesurer les mouvements du repère de détection par rapport à un repère de référence pour convertir les coordonnées de la position du chariot dans le repère de détection en coordonnées positionnelles dans le repère de référence. Cependant, la précision d'une telle centrale est relativement faible de sorte qu'il est nécessaire de corriger périodiquement les données de positionnement fournies par celles-ci.

Un but de l'invention est de permettre une localisation relativement précise et peu coûteuse de chariots dans un lieu.

A cet effet, on prévoit, selon l'invention, un système de localisation d'au moins un chariot mobile dans un lieu. Le système comprend au moins une borne de communication qui a une portée couvrant le lieu et qui est reliée à une unité informatique de commande, et au moins un module électronique qui est embarqué sur le chariot. Le module électronique embarqué comporte un dispositif de transmission agencé pour transmettre des données de positionnement à la borne de communication et une centrale de détection inertielle de mouvement qui comporte un dispositif de détection de mouvement linéaire le long d'axes d'un repère de détection et un dispositif de détection de mouvement angulaire autour des axes du repère de détection et qui est agencée pour fournir des données de positionnement à partir de données de mesure de mouvement linéaire et de données de mesure de mouvement angulaire. Le module est monté sur un élément du chariot tel que tout déplacement du chariot dans le lieu provoque un déplacement angulaire de l'élément, le système étant agencé pour détecter un arrêt du chariot lorsque les données de mesure de mouvement angulaire correspondent à un mouvement angulaire nul à un instant de mesure et pour mettre à zéro des vitesses calculées à partir des données de mesure de mouvement linéaire correspondant au même instant de mesure.

Ainsi, tout mouvement du chariot entraîne un mouvement angulaire de l'élément et donc un mouvement angulaire du module électronique embarqué et, inversement, lorsque le chariot est immobile, l'élément, et donc le module électronique embarqué, sont eux aussi immobiles. Il s'ensuit que le dispositif de détection de mouvement angulaire peut de manière fiable détecter un mouvement du chariot, même à vitesse constante, et l'arrêt de ce chariot. Il est de la sorte possible de corriger des erreurs du dispositif de détection de mouvement linéaire et de rendre plus fiable la mesure de position réalisée.

L'invention a également pour objet un procédé de localisation, comprenant les étapes de :
- initialiser des coordonnées initiales du chariot par rapport à un repère local du lieu et déterminer un décalage du repère de détection par rapport au repère local,
- détecter des mouvements du chariot dans le lieu et déterminer la position du chariot à partir des données de mesure de mouvement linéaire, des données de mesure de mouvement angulaire, des coordonnées initiales et du décalage entre le repère local et le repère de détection,
- détecter un arrêt du chariot lorsque les données de mesure de mouvement angulaire correspondent à un mouvement angulaire nul à un instant de mesure et mettre à zéro des vitesses calculées à partir des données de mesure de mouvement linéaire correspondant au même instant de mesure.

L'invention a également pour objet :
- un programme d'ordinateur comprenant des instructions pour mettre en oeuvre, par un équipement de type serveur informatique, le procédé de localisation,
- des moyens de stockage qui contiennent un tel programme d'ordinateur,
- un dispositif magnétique comprenant au moins un circuit magnétique agencé pour émettre un champ magnétique aligné selon un premier axe d'un repère comprenant également un deuxième axe et un troisième axe, caractérisé en ce que le dispositif magnétique est agencé pour émettre un champ magnétique successivement aligné sur le premier axe, sur le deuxième axe et sur le troisième axe du repère pour mettre en oeuvre le procédé de localisation,
- une base d'accueil d'un chariot comportant un tel dispositif magnétique,
- un module électronique embarqué d'un chariot comportant un dispositif de détection de champs magnétique émis par un tel dispositif magnétique.

D'autres caractéristiques et avantages de l'invention ressortiront à la lecture de la description qui suit d'un mode de réalisation particulier non limitatif de l'invention.

Il sera fait référence aux dessins annexés, parmi lesquels :

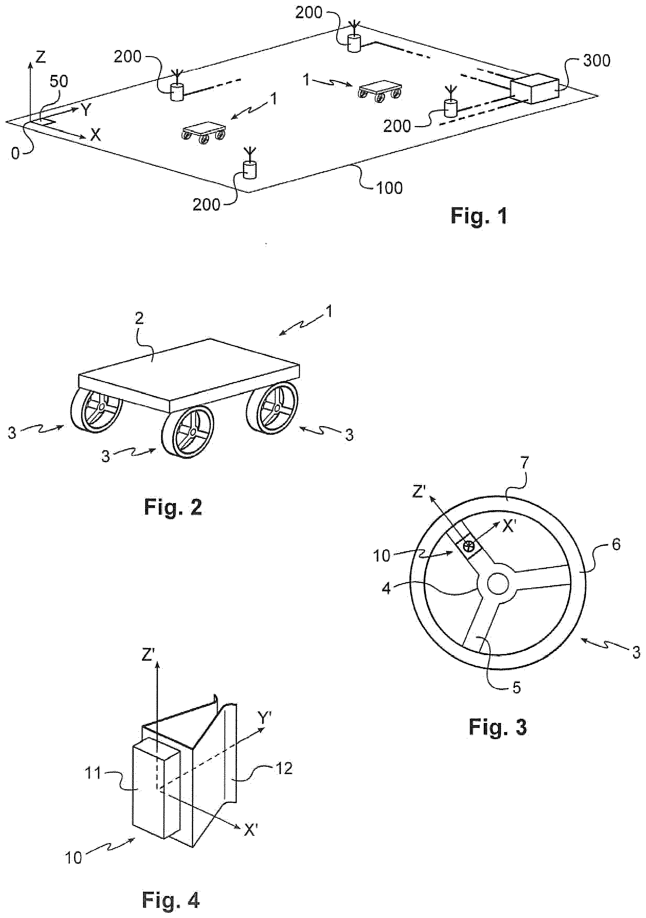

- la figure 1 est une vue schématique en perspective d'un système selon l'invention ;
- la figure 2 est une vue schématique en perspective d'un chariot de ce système ;
- la figure 3 est une vue de côté d'une roue de ce chariot ;
- la figure 4 est une vue schématique en perspective d'un module électronique embarqué équipant cette roue.

En référence aux figures, l'invention est ici décrite en relation avec des chariots tels que des chariots « ROLLIS », généralement désignés en 1, évoluant dans un lieu 100, tel qu'un hangar, équipé d'un réseau de télécommunication « LoRa ». Bien entendu, l'invention est utilisable avec d'autres réseaux de télécommunication et par exemple des réseaux « LTEM », « ZIGBEE » ; fonctionnant dans la bande de fréquences ISM ou dans une autre bande de fréquences comme par exemple la bande des fréquences 434 MHz ou 2,4 GHz, que ces réseaux soient des réseaux propriétaires ou publics.

L'infrastructure du réseau comprend des bornes de communication 200 qui sont réparties dans le lieu 100 en des positions prédéterminées dont les coordonnées sont connues (par exemple au moyen d'un récepteur de signaux satellites tels que des signaux GPS). Les bornes de communication 200 comportent de façon connue en elle-même des moyens d'émission/réception fonctionnant selon le protocole de communication choisi et une antenne accordée sur la bande de fréquences de communication choisie. Les bornes de communication 200 sont reliées à un serveur informatique 300 formant une unité de commande et exécutant un programme de suivi des chariots 1 dans le lieu 100. Le serveur informatique 300 comprend une mémoire dans laquelle sont mémorisées les identifiants et les positions des bornes de communication 200, mais également les identifiants et les positions successives de chaque chariot 1. Cette mémoire peut bien entendu comprendre le programme de suivi des chariots 1 et d'autres informations relatives aux bornes de communication 200, comme leurs caractéristiques techniques, et aux chariots, comme leur chargement, leur suivi de maintenance ou autre.

Le chariot 1 comprend un châssis 2, sous la forme d'une plate-forme, sous lequel sont montées quatre roues 3 pour pivoter autour d'un axe horizontal.

Chaque roue 3 comprend un moyeu 4 à partir duquel s'étendent des rayons 5 reliant le moyeu 4 à une jante 6. Sur la jante 6 est fixée une bande de roulement 7.

Sur l'un des rayons 5 de l'une des roues 3 est fixé un module électronique embarqué 10. Ce module électronique embarqué comprend une unité électronique 11 monté sur un support 12 ici sous la forme d'une pince métallique élastiquement déformable qui est engagée à force sur ledit rayon 5.

L'unité électronique 11 comporte un dispositif de transmission, une centrale de détection inertielle de mouvement et une batterie pour les alimenter. Le dispositif de transmission, connu en lui-même, est agencé pour transmettre des données de positionnement aux bornes de communication 200. La centrale de détection inertielle de mouvement, connue en elle-même, est réalisée sous la forme d'un microsystème électromécanique (MEMS) et comporte un dispositif de détection de mouvement linéaire le long d'axes X', Y', Z' d'un repère de détection et un dispositif de détection de mouvement angulaire des axes X', Y', Z' du repère de détection par rapport à un repère galiléen de référence. La centrale de détection inertielle est agencée pour élaborer des données de positionnement à partir de données de mesure de mouvement linéaire fournies par le dispositif de détection de mouvement linéaire et de données de mesure de mouvement angulaire fournies par le dispositif de détection de mouvement angulaire. Le dispositif de détection de mouvement linéaire comprend des accéléromètres positionnés pour mesurer une composante d'accélération selon les axes X', Y', Z' et le dispositif de détection de mouvement angulaire comprend des gyromètres positionnés pour mesurer une vitesse angulaire de chacun des axes X', Y', Z' par rapport au repère galiléen de référence. Les données de positionnement élaborée par la centrale inertielle à partir des données de mesure sont les coordonnées de la centrale de détection inertielle dans un repère local fixe X, Y, Z qui sera précisé dans la suite de la description.

Le système comprend en outre une base 50 d'accueil des chariots 1 dans une orientation prédéterminée. La base comprend un dispositif de rechargement d'une batterie embarquée sur le chariot. Le rechargement est effectué par induction.

Cette base est disposée dans le lieu 100 en une position fixe dont les coordonnées GPS sont connues. Cette position correspond à l'origine du repère local X, Y, Z dont l'orientation par rapport au repère galiléen de référence est connue. La base comprend des moyens de positionnement d'un des chariots 1 dans une position et une orientation prédéterminées. Un opérateur doit en outre orienter autour de son axe la roue 3 pourvue du module électronique embarqué 10 pour l'amener dans une orientation prédéterminée. Ainsi, positionnée et orientée, la centrale de détection inertielle a son repère de détection X', Y', Z' positionné et orienté avec un décalage prédéterminé par rapport au repère local X, Y, Z. Ce décalage prédéterminé est représenté par les données de recalage suivante : un écart positionnel entre l'origine du repère de détection X', Y', Z' et l'origine du repère local X, Y, Z ; un décalage angulaire entre les axes X et X' ; un décalage angulaire entre les axes Y et Y' ; un décalage angulaire entre les axes Z et Z'.

Le système est agencé pour initialiser une origine des déplacements du chariot 1 dans le lieu 100 lorsque le chariot 1 est positionné dans la base. Lorsqu'un des chariots 1 est installé dans la base 50 et que le chargement de la batterie débute, une communication initiale est instaurée entre le serveur informatique 300 et le module électronique embarqué 10 dudit chariot 1. Les données de recalage sont transmises au module électronique embarqué 10 et donc à la centrale de détection inertielle qui peut déterminer sa position par rapport au repère local X, Y, Z et donc élaborer par la suite les données de positionnement correspondantes. Cette communication initiale est initiée par le module électronique embarqué 10 via les bornes de communication 200 et se poursuit de la même manière.

La centrale de détection inertielle du module électronique embarqué 10 est agencée pour calculer périodiquement les données de positionnement à partir : des données de mesure de mouvement linéaire, des données de mesure de mouvement angulaire, des données de recalage et de la position d'origine. Le module électronique embarqué 10 est agencé pour périodiquement entrer en communication avec le serveur informatique 300 via les bornes de communication 200 et lui transmettre les données de pasitionnement.

Ainsi, lorsque le chariot 1 est déplacé, le module électronique embarqué émet périodiquement les données de positionnement qui sont élaborées au fur et à mesure de son déplacement.

La centrale de détection inertielle du module électronique embarqué est agencée pour détecter un arrêt du chariot 1 lorsque les données de mesure de mouvement angulaire correspondent à un mouvement angulaire nul à un instant de mesure et pour mettre à zéro des vitesses calculées à partir des données de mesure de mouvement linéaire correspondant au même instant de mesure. Ceci permet de détecter des erreurs des accéléromètres et de corriger ou compenser celles-ci de manière à améliorer la précision de la localisation.

De préférence ici, le mouvement angulaire est considéré comme nul lorsque les données de mesure de mouvement angulaire révèlent un mouvement ayant une amplitude inférieure à un seuil prédéterminé. Ceci permet de s'affranchir de la prise en compte de vibrations qui feraient osciller la roue 3 du chariot 1 sur lequel est fixé le module électronique embarqué ou d'erreur des gyromètres.

Le procédé de l'invention comprend ainsi les étapes suivantes :
- initialiser des coordonnées initiales du chariot 1 par rapport au repère local X, Y, Z du lieu 100 et déterminer un décalage du repère de détection X', Y', Z' par rapport au repère local X, Y, Z,
- détecter des mouvements du chariot 1 dans le lieu 100 et déterminer la position du chariot 1 à partir des données de mesure de mouvement linéaire, des données de mesure de mouvement angulaire, des coordonnées initiales et du décalage entre le repère local X, Y, Z et le repère de détection X', Y', Z',
- détecter un arrêt du chariot 1 lorsque les données de mesure de mouvement angulaire correspondent à un mouvement angulaire nul à un instant de mesure et mettre à zéro des vitesses calculées à partir des données de mesure de mouvement linéaire correspondant au même instant de mesure.

En variante, le module électronique embarqué 10 comprend un capteur de champ magnétique et la base 50 comprend un dispositif magnétique agencé pour émettre un champ magnétique successivement aligné sur les axes X, Y et Z du repère local. Le module électronique embarqué 10 est agencé pour déterminer le décalage du repère de détection X', Y', Z' par rapport au repère local X, Y, Z et tenir compte de ce décalage dans les données de positionnement.

Selon un premier mode de réalisation, le dispositif magnétique comprend un circuit magnétique qui est agencé pour émettre un champ magnétique selon une direction donnée et qui est monté sur un support orientable motorisé permettant d'aligner ladite direction successivement avec chacun des axes X, Y et Z du repère.

Selon un deuxième mode de réalisation, le dispositif magnétique comprend un premier circuit électromagnétique agencé pour, lorsqu'il est alimenté, émettre un champ magnétique aligné sur l'axe X, un deuxième circuit électromagnétique agencé pour, lorsqu'il est alimenté, émettre un champ magnétique aligné sur l'axe Y du repère et un troisième circuit électromagnétique agencé pour, lorsqu'il est alimenté, émettre un champ magnétique aligné sur l'axe Z du repère. Les circuits électromagnétiques sont reliés à un circuit d'alimentation permettant de sélectivement alimenter l'un ou l'autre des circuits électromagnétiques.

Selon un troisième mode de réalisation combinant les deux précédents, deux circuits électromagnétiques sont montés sur un support orientable autour d'un axe du repère, par exemple l'axe Z, et le premier circuit électromagnétique est agencé pour émettre un champ magnétique aligné avec l'axe Z de telle manière que le champ magnétique produit par le deuxième circuit électromagnétique puisse être aligné sur l'axe X ou sur l'axe Y au moyen de la motorisation du support.

Pour l'initialisation des coordonnées et des angles, le chariot 1 est amené dans la base 50 sans qu'il soit nécessaire d'orienter la roue 3 sur laquelle est fixé le module électronique embarqué 10 et le procédé de l'invention comprend les étapes de :
- commander le dispositif magnétique pour émettre, au niveau de la base 50, un champ magnétique successivement aligné sur des axes X, Y, Z du repère local,
- faire détecter ce champ magnétique par le magnétomètre du module électronique embarqué,
- déterminer le décalage du repère de détection X', Y', Z' par rapport au repère local X, Y, Z et de tenir compte de ce décalage dans l'élaboration des données de positionnement.

Par exemple, le champ magnétique est émis selon la séquence suivante :
- une seconde en alignement avec l'axe X,
- deux secondes en alignement avec l'axe Y,
- trois secondes en alignement avec l'axe Z.

Les durées d'émission différentes permettent au module électronique embarqué 10 d'identifier les axes X, Y, Z.

Bien entendu, l'invention n'est pas limitée au mode de réalisation décrit mais englobe toute variante entrant dans le cadre de l'invention telle que définie par les revendications.

En particulier, le chariot peut comprendre plusieurs modules électroniques embarqués. Avantageusement, chacun des modules peut être fixé sur des roues de telle manière qu'une différence dans les positions calculées par deux modules déclenche une intervention de maintenance pour vérifier le bon fonctionnement des roues associées.

Le module électronique embarqué peut être fixé par tout moyen, de préférence pour rester amovible, et par exemple par vissage, boulonnage, clipage... mais aussi par collage ou autre moyen de fixation définitive.

Le module électronique embarqué peut être fixé à un élément lié à au moins une roue en rotation, par exemple un galet frottant sur la roue ou une poulie liée à celle-ci via une courroie. Le module électronique embarqué peut aussi être fixé à un pendule monté sur le chariot de telle manière que tout déplacement du chariot amorce une oscillation du pendule.

Les coordonnées initiales peuvent être déterminées à partir de signaux de positionnement par satellites ou par tout autre moyen.

En variante, la position du chariot est calculée par le serveur informatique à partir des données de mesure de mouvement linéaire et des données de mesure de mouvement angulaire fournies par le module électronique embarqué via les bornes de communication.

La ou les bornes de communication peuvent appartenir à une infrastructure réseau externe au lieu.

La batterie du module peut être extérieure au module ou intégrée à celui-ci.

La batterie du module peut ne pas être rechargeable, la base ne comprenant alors pas de dispositif de charge.

## Revendications

1. Système de localisation d'au moins un chariot (1) mobile dans un lieu (100), le système comprenant au moins une borne de communication (200) qui a une portée couvrant le lieu et qui est reliée à une unité informatique de commande (300), et au moins un module électronique (10) embarqué sur le chariot et comportant un dispositif de transmission agencé pour transmettre des données de positionnement à la borne de communication et une centrale de détection inertielle de mouvement qui comporte un dispositif de détection de mouvement linéaire le long d'axes d'un repère de détection (X', Y', Z') et un dispositif de détection de mouvement angulaire autour des axes du repère de détection, la centrale de détection inertielle étant agencée pour fournir des données de positionnement à partir de données de mesure de mouvement linéaire et de données de mesure de mouvement angulaire, le module étant monté sur un élément du chariot tel que tout déplacement du chariot dans le lieu provoque un déplacement angulaire de l'élément, le système étant agencé pour détecter un arrêt du chariot lorsque les données de mesure de mouvement angulaire correspondent à un mouvement angulaire nul à un instant de mesure et pour mettre à zéro des vitesses calculées à partir des données de mesure de mouvement linéaire correspondant au même instant de mesure.

2. Système selon la revendication 1, dans lequel le chariot (1) comporte un châssis (2) reposant sur des roues (3) et le module électronique (10) embarqué est fixé à l'une de ces roues.

3. Système selon la revendication 1, comprenant une base d'accueil (50) du chariot (1) dans une orientation prédéterminée, la base étant disposée dans le lieu (100) en une position connue et le système étant agencé pour initialiser une origine des déplacements du chariot dans le lieu lorsque le chariot est positionné dans la base.

4. Système selon la revendication 3, dans lequel le module électronique (10) embarqué comprend un capteur de champ magnétique et la base d'accueil (50) comprend un dispositif magnétique agencé pour émettre un champ magnétique successivement aligné sur des axes d'un repère local (X, Y, Z) dont la durée d'émission diffère selon les axes dudit repère pour permettre au module électronique d'identifier lesdits axes, le module électronique embarqué étant agencé pour déterminer un décalage du repère de détection par rapport au repère local et tenir compte de ce décalage dans les données de positionnement.

5. Système selon la revendication 3 ou 4, dans lequel la base (50) comprend un dispositif de rechargement d'une batterie intégrée dans le module (10).

6. Procédé de localisation d'au moins un chariot (1) mobile dans un lieu (100) au moyen d'un système selon l'une quelconque des revendications précédentes, comprenant les étapes de :
- initialiser des coordonnées initiales du chariot par rapport à un repère local (X, Y, Z) du lieu et déterminer un décalage du repère de détection (X', Y', Z') par rapport au repère local,
- détecter des mouvements du chariot dans le lieu et déterminer la position du chariot à partir des données de mesure de mouvement linéaire, des données de mesure de mouvement angulaire, des coordonnées initiales et du décalage entre le repère local et le repère de détection,
- détecter un arrêt du chariot lorsque les données de mesure de mouvement angulaire correspondent à un mouvement angulaire nul à un instant de mesure et mettre à zéro des vitesses calculées à partir des données de mesure de mouvement linéaire correspondant au même instant de mesure.

7. Procédé selon la revendication 6, dans lequel le mouvement angulaire est considéré comme nul lorsque les données de mesure de mouvement angulaire révèlent un mouvement ayant une amplitude inférieure à un seuil prédéterminé.

8. Procédé selon la revendication 6 ou 7, dans lequel les coordonnées initiales sont déterminées à partir de signaux de positionnement par satellites.

9. Procédé selon la revendication 8, dans lequel l'initialisation des coordonnées initiales se fait en amenant le chariot (1) dans une base d'accueil (50) positionnée aux coordonnées initiales.

10. Procédé selon la revendication 9, comprenant les étapes, lorsque le chariot (1) est dans la base d'accueil (50), d'émettre au niveau de la base d'accueil un champ magnétique successivement aligné sur des axes du repère local, de faire détecter ce champ magnétique par le module électronique embarqué, de déterminer le décalage du repère de détection par rapport au repère local et de tenir compte de ce décalage dans les données de positionnement.

11. Procédé selon la revendication 9, dans lequel le décalage entre le repère local (X, Y, Z) et le repère de détection (X', Y', Z') est transmis au module électronique (10) embarqué via la borne de télécommunication (200) lors de l'initialisation des coordonnées initiales.

12. Procédé selon la revendication 6, dans lequel la position du chariot (1) est calculée par le module électronique (10) et est envoyée à l'unité de commande (300) via la borne de communication (200).

13. Programme d'ordinateur comprenant des instructions pour mettre en oeuvre, par un équipement de type serveur informatique, le procédé de localisation selon l'une quelconque des revendications 6 à 12.

14. Moyens de stockage qui contiennent un programme d'ordinateur comportant des instructions pour mettre en oeuvre, par un équipement de type serveur informatique, le procédé de localisation selon l'une quelconque des revendications 6 à 12.

## Patentansprüche

1. System zur Positionsbestimmung zumindest eines mobilen Wagens (1) innerhalb eines Ortes (100), wobei das System umfasst: zumindest einen Kommunikationspunkt (200) mit einer den Ort abdeckenden Reichweite, die mit einer Computer-Steuereinheit (300) verbunden ist, und zumindest ein auf dem Wagen mitgeführtes, elektronisches Modul (10), das eine Übertragungsvorrichtung enthält, die derart eingerichtet ist, dass sie Positionsdaten an den Kommunikationspunkt überträgt, sowie eine inertiale Bewegungserkennungszentrale, welche eine Vorrichtung zur Erkennung einer Linearbewegung entlang von Achsen eines Erkennungskoordinatensystems (X' , Y' , Z' ) und eine Vorrichtung zur Erkennung einer Winkelbewegung um die Achsen des Erkennungskoordinatensystems herum enthält, wobei die inertiale Erkennungszentrale derart eingerichtet ist, dass sie aus Linearbewegungs-Messdaten und aus Winkelbewegungs-Messdaten Positionsdaten liefert, wobei das Modul derart an einem Element des Wagens angebracht ist, dass jede Bewegung des Wagens innerhalb des Ortes eine Winkelverschiebung des Elements bewirkt, wobei das System derart eingerichtet ist, dass es einen Stillstand des Wagens erkennt, wenn die Winkelbewegungs-Messdaten zu einem gegebenen Messzeitpunkt einer Null-Winkelbewegung entsprechen, und dass es aus den Linearbewegungs-Messdaten berechnete Geschwindigkeiten, die demselben Messzeitpunkt entsprechen, auf Null setzt.

2. System nach Anspruch 1, wobei der Wagen (1) ein auf Rädern (3) ruhendes Fahrgestell (2) enthält und das mitgeführte, elektronische Modul (10) an einem der Räder befestigt ist.

3. System nach Anspruch 1, umfassend eine Dockingstation (50) zur Aufnahme des Wagens (1) in einer vorbestimmten Ausrichtung, wobei die Dockingstation in einer bekannten Position innerhalb des Ortes (100) angeordnet ist und das System derart eingerichtet ist, dass es einen Ausgangspunkt für die Bewegungen des Wagens innerhalb des Ortes initialisiert, wenn der Wagen in der Dockingstation positioniert ist.

4. System nach Anspruch 3, wobei das mitgeführte, elektronische Modul (10) einen Magnetfeldsensor umfasst und die Dockingstation (50) eine Magnetvorrichtung umfasst, die derart eingerichtet ist, dass sie ein Magnetfeld aussendet, das nacheinander auf Achsen eines lokalen Koordinatensystems (X, Y, Z) ausgerichtet wird und dessen Emissionsdauer sich je nach den Achsen des Koordinatensystems unterscheidet, damit das elektronische Modul die Achsen identifizieren kann, wobei das mitgeführte, elektronische Modul dazu eingerichtet ist, eine Verschiebung des Erkennungs-Koordinatensystems in Bezug auf das lokale Koordinatensystem zu bestimmen und diese Verschiebung in den Positionsdaten zu berücksichtigen.

5. System nach Anspruch 3 oder 4, wobei die Dockingstation (50) eine Vorrichtung zum Aufladen einer in dem Modul (10) integrierten Batterie umfasst.

6. Verfahren zur Positionsbestimmung zumindest eines mobilen Wagens (1) innerhalb eines Ortes (100) mithilfe eines Systems nach einem der vorhergehenden Ansprüche, umfassend die Schritte dass:
- Anfangskoordinaten des Wagens in Bezug auf ein lokales Koordinatensystem (X, Y, Z) des Ortes initialisiert werden und eine Verschiebung des Erkennungs-Koordinatensystems (X', Y', Z') in Bezug auf das lokale Koordinatensystem bestimmt wird,
- Bewegungen des Wagens innerhalb des Ortes erkannt werden und die Position des Wagens aus den Linearbewegungs-Messdaten, aus den Winkelbewegungs-Messdaten, aus den Anfangskoordinaten und aus der Verschiebung zwischen dem lokalen Koordinatensystem und dem Erkennungs-Koordinatensystem bestimmt wird,
- ein Stillstand des Wagens erkannt wird, wenn die Winkelbewegungs-Messdaten zu einem gegebenen Messzeitpunkt einer Null-Winkelbewegung entsprechen, und dass die aus den Linearbewegungs-Messdaten berechneten Geschwindigkeiten, die demselben Messzeitpunkt entsprechen, auf Null gesetzt werden.

7. Verfahren nach Anspruch 6, wobei die Winkelbewegung als Null betrachtet wird, wenn aus den Winkelbewegungs-Messdaten eine Bewegung mit einer Amplitude unter einem vorbestimmten Schwellenwert vorliegt.

8. Verfahren nach Anspruch 6 oder 7, wobei die Anfangskoordinaten aus Satellitenpositionierungssignalen bestimmt werden.

9. Verfahren nach Anspruch 8, wobei die Initialisierung der Anfangskoordinaten durch Rückführen des Wagens (1) in eine an den Anfangskoordinaten positionierte Dockingstation (50) erfolgt.

10. Verfahren nach Anspruch 9, welches, wenn sich der Wagen (1) in der Dockingstation (50) befindet, die Schritte umfasst, dass an der Dockingstation ein Magnetfeld ausgesendet wird, das nacheinander auf Achsen des lokalen Koordinatensystems ausgerichtet wird; das Magnetfeld durch das mitgeführte, elektronische Modul erkannt wird; die Verschiebung des Erkennungs-Koordinatensystems in Bezug auf das lokale Koordinatensystem bestimmt wird und diese Verschiebung in den Positionsdaten berücksichtigt wird.

11. Verfahren nach Anspruch 9, wobei während der Initialisierung der Anfangskoordinaten die Verschiebung zwischen dem lokalen Koordinatensystem (X, Y, Z) und dem Erkennungs-Koordinatensystem (X', Y', Z') über den Kommunikationspunkt (200) an das mitgeführte, elektronische Modul (10) gesendet wird.

12. Verfahren nach Anspruch 6, wobei die Position des Wagens (1) durch das elektronische Modul (10) berechnet wird und über den Kommunikationspunkt (200) an die Steuereinheit (300) gesendet wird.

13. Computerprogramm, welches Befehle umfasst, die ein Server-Gerät dazu veranlassen, das Verfahren nach einem der Ansprüche 6 bis 12 auszuführen.

14. Speichermedien mit einem Computerprogramm, welches Befehle enthält, die ein Server-Gerät dazu veranlassen, das Verfahren nach einem der Ansprüche 6 bis 12 auszuführen.

## Claims

1. A system for locating at least one movable trolley (1) in a premises (100), the system comprising at least one communications beacon (200) having range that covers the premises and that is connected to a control computer unit (300), and at least one electronic module (10) on board the trolley and comprising a transmitter device arranged to transmit positioning data to the communications beacon, and an inertial motion detector unit that comprises a device for detecting linear motion along axes of a detection reference frame (X', Y', Z') and a device for detecting angular motion about the axes of the detection reference frame, the inertial motion detector being arranged to provide positioning data on the basis of the linear motion measurement data and the angular motion measurement data, the module being mounted on an element of the trolley such that any movement of the trolley in the premises gives rise to an angular movement of the element, the system being arranged to detect that the trolley has stopped whenever the angular motion measurement data corresponds to zero angular motion at a measurement instant and then to reset to zero the speeds calculated on the basis of the linear motion measurement data corresponding to the same measurement instant.

2. A system according to claim 1, wherein the trolley (1) comprises a chassis (2) resting on wheels (3) and the onboard electronic module (10) is fastened to one of the wheels.

3. A system according to claim 1, including a docking base (50) for receiving the trolley (1) in a predetermined orientation, the base being arranged in the premises (100) at a known position and the system being arranged to initialize an origin for movements of the trolley in the premises when the trolley is positioned in the base.

4. A system according to claim 3, wherein the onboard electronic module (10) includes a magnetic field sensor and the docking base (50) includes a magnetic device arranged to emit a magnetic field that is aligned in succession on axes of a local reference frame (X, Y, Z) with emissions of duration that differ on the axes of said reference frame so as to enable the electronic module to identify said axes, the onboard electronic module being arranged to determine an offset between the detection reference frame and the local reference frame and to take that offset into account in the positioning data.

5. A system according to claim 3 or claim 4, wherein the base (50) includes a charger device for recharging a battery integrated in the module (10).

6. A method of locating at least one trolley (1) that is movable in a premises (100) by means of a system according to any preceding claim, the method comprising the following steps:
- initializing the initial coordinates of the trolley relative to a local reference frame (X, Y, Z) of the premises and determining an offset between the detection reference frame (X', Y', Z') and the local reference frame;
- detecting movement of the trolley in the premises and determining the position of the trolley from the linear motion measurement data, the angular motion measurement data, the initial coordinates, and the offset between the local reference frame and the detection reference frame; and
- detecting that the trolley has stopped whenever the angular motion measurement data corresponds to zero angular motion at a measurement instant and then setting to zero the speeds calculated from the linear motion measurement data corresponding to the same measurement instant.

7. A method according to claim 6, wherein the angular motion is considered as being zero when the angular motion measurement data represents motion of amplitude below a predetermined threshold.

8. A method according to claim 6 or claim 7, wherein the initial coordinates are determined on the basis of satellite positioning signals.

9. A method according to claim 8, wherein the initial coordinates are initialized by taking the trolley (1) to a docking base (50) positioned at the initial coordinates.

10. A method according to claim 9, including, when the trolley (1) is in the docking base (50), the steps of: the docking base (50) emitting a magnetic field that is aligned in succession with each the axes of the local reference frame, causing this magnetic field to be detected by the onboard electronic module, determining the offset between the detection reference frame and the local reference frame, and taking the offset into account in the positioning data.

11. A method according to claim 9, wherein the offset between the local reference frame (X, Y, Z) and the detection reference frame (X', Y', Z') is transmitted to the onboard electronic module (10) via the telecommunications beacon (200) during initialization of the initial coordinates.

12. A method according to claim 6, wherein the position of the trolley (1) is calculated by the electronic module (10) and is sent to the control unit (300) via the communications beacon (200).

13. A computer program including instructions for enabling computer server type equipment to perform the locating method according to any one of claims 6 to 12.

14. Storage means containing a computer program including instructions for enabling computer server type equipment to perform the locating method according to any one of claims 6 to 12.
